# EUROPÄISCHE PATENTSCHRIFT

(11) **EP 2 661 967 B1**
(45) Veröffentlichungstag und Bekanntmachung des Hinweises auf die Patenterteilung: **02.08.2017**
(21) Anmeldenummer: 12167620.9
(22) Anmeldetag: 11.05.2012
(51) Int. Cl.: A23C 3/03, A23C 7/04, A23C 9/142, A23C 19/05

(54) **Verfahren zur Herstellung von Käsereimilch**
Process for making cheese dairy milk
Procédé destiné à la fabrication de lait de fromagerie

(43) Veröffentlichungstag der Anmeldung: 13.11.2013
(73) Patentinhaber: DMK Deutsches Milchkontor GmbH, 28199 Bremen (DE)
(72) Erfinder: Döring, Sven-Rainer, 27404 Zeven (DE)
(74) Vertreter: Fabry, Bernd

(56) Entgegenhaltungen:
- EP-A1- 2 368 437
- WO-A1-00/74495
- WO-A1-96/36238
- DE-A1-102004 039 733
- DE-A1-102005 007 941
- DE-A1-102010 037 550
- DE-C1- 10 036 085
- US-A- 5 683 733

## Beschreibung

### Gebiet der Erfindung

Die Erfindung befindet sich auf dem Gebiet der Lebensmitteltechnologie und betrifft ein verbessertes Verfahren zur Herstellung von so genannter Käsereimilch.

### Stand der Technik

Unter der Bezeichnung Käsereimilch wird eine Rohmilch bezeichnet, die nach Pasteurisierung und Fetteinstellung zur Herstellung von Käse, aber auch Joghurt, dickgelegt werden soll. Da die Käseherstellung früher überwiegend in Kesseln durchgeführt wurde - was heute teilweise auch noch für die Herstellung von Parmesan typisch ist - wird auch synonym von Kesselmilch gesprochen.

Damit Rohmilch für die Herstellung von Käse eingesetzt werden kann, muss sie gesetzlichen Anforderungen entsprechen, die in der Käseverordnung niedergelegt sind. Üblicherweise beginnt der Verarbeitungsprozess mit einer Erhitzung der Rohmilch durch Wärmeaustausch mit Wärmeträgermedien bei gleichzeitiger teilweiser Wärmerückgewinnung. Die Separation in Magermilch, Rahm und Separatorschlamm wird üblicherweise in einer Pasteurisierungseinheit mit integriertem Separator durchgeführt. Dabei wird die Erhitzung so weit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch durch erneute Erhitzung einer zweiten Pasteurisierung unterzogen.

Von erheblichem Nachteil ist dabei, dass durch diese Pasteurisierung, die üblicherweise in einem Temperaturbereich von 72 bis 74 °C über einen Zeitraum von 15 - 30 Sekunden ausgeführt wird, nur die in der Rohmilch vorhandenen vegetativen Keime, nicht aber die thermoresistenten Sporen und thermoduren Keime abgetötet werden. Während der an die Pasteurisierung anschließenden Wärmerückgewinnung durchläuft die Milch einen Temperaturbereich von etwa 45 °C, der gerade dem Wachstumsoptimum dieser verbliebenen Keime entspricht, so dass sich die in der vorbehandelten Milch verbliebenen Sporen stürmisch vermehren.

Diese Keime können bei der Käsereifung zu Fehlgärungen und Käsefehlern führen, beispielsweise Fehllochungen. Außerdem enthält die bei der Käseherstellung ablaufende Molke einen entsprechend hohen Anteil der thermoresistenten Keime. Da in den molkeverarbeitenden Prozessen keine ausreichend hohen Erhitzungstemperaturen Anwendung finden, sind die in ihr enthaltenen thermoresistenten Keime unerwünscht und können zu Spezifikationsverletzungen, insbesondere hinsichtlich der Keimzahl, in den Endprodukten führen. Aus diesem Grund wird die so vorbehalte Milch in der Regel einer zweiten thermischen Schritt (Thermisierung) unterworfen und dann über eine Bakterofuge geleitet, um die Keimzahl so weit zu reduzieren, wie dies aus produktionstechnischen und gesetzlichen Erfordernissen notwendig ist. Es liegt auf der Hand, dass die zweifache thermische Behandlung technisch aufwendig und energieintensiv ist, was die Ökonomie des gesamten Prozesses belastet.

Aus dem Stand der Technik sind Verfahren bekannt, die versuchen, die oben genannten Nachteile abzustellen. So wird beispielsweise in der EP 2368437 A1 (Müller) vorgeschlagen, die Separation in einem kalten Zustand der Rohmilch und die Erhitzung nur an der standardisierten Milch vorzunehmen. Auch wenn das Verfahren energetische Vorteile aufweist, ist die Entkeimung indes unbefriedigend.

Aus der US 2002 012732 A1 (Lindquist) ist ein Verfahren bekannt, bei der man eine Magermilch einer Filtration unterwirft und dabei eine Permeat und ein Retentat erhält. Während das Permeat einer Wärmebehandlung unterworfen wird, wird das Retentat ein weiteres Mal filtriert und das dabei erhaltene zweite Permeat dem ersten Permeat zugesetzt. Das Verfahren erweist sich in der Praxis jedoch als viel zu aufwendig.

Gegenstand der US 6,372,276 B1 (Lindquist) ist ein Verfahren zur Erzeugung einer sterilen Milch, bei der Rohmilch zunächst filtriert und das so erhaltene Permeat anschließend in mehreren Stufen hitzebehandelt wird. Bei dieser Verfahrensdurchführung beobachtet man jedoch ein häufiges Verstopfen der Membranen, was zu ständigen Unterbrechungen im kontinuierlichen Verfahrensablauf führt, zudem werden die Keimzahlen nicht ausreichend reduziert. US 5 683 733 A offenbart ein Verfahren zur Herstellung von pasteurisierter Milch, in dem Rohmilch in einem Wärmeaustauscher auf vorzugsweise 65 °C erwärmt und in einer Zentrifuge in die Bestandteile Rahm, Magermilch und Schlamm getrennt wird. Der Magermilchstrom wird mikrofiltriert, wobei vorzugsweise Keramikmembrane mit einer bevorzugten Porengröße von 0,8-1,4 µm zum Einsatz kommen. Der Rahm wird bei vorzugsweise 110 bis 130°C erhitzt, das Permeat wird mit dem wärmebehandelten Rahm vermischt und die derart standardisierte Milch wird bei 70-90 °C für bis zu 25 Sekunden pasteurisiert. Die Aufgabe der vorliegenden Erfindung hat somit darin bestanden, eine standardisierte Käserei- bzw. Kesselmilch zur Verfügung zu stellen, die unter Einsatz eines einzigen thermischen Behandlungsschrittes von allen vegetativen Keimen und thermoresistenten Sporen befreit ist, so dass die verbliebene Keimzahl unterhalb des gesetzlich zulässigen und aus Produktionssicht akzeptablen Wertes liegt.

### Beschreibung der Erfindung

Gegenstand der Erfindung ist ein Verfahren zur Herstellung von Käsereimilch, bei dem man
(a) Rohmilch einer Wärmebehandlung unterwirft,
(b) das wärmebehandelte Produkt von festen Bestandteilen befreit,
(c) das resultierende Zwischenprodukt entfettet,
(d) die so erhaltene Magermilch einer Mikrofiltration unterwirft und
(e) das resultierende Permeat durch Zugabe einer Menge des im Schritt (c) abgetrennten Rahms auf den gewünschten Fettgehalt einstellt, und die so erhaltene standardisierte Milch
(f) abschließend pasteurisiert, wie beansprucht.

Überraschenderweise wurde gefunden, dass ein Mikrofiltrationsschritt, der der Pasteurisierung nach- und nicht vorgeschaltet ist, in Summe zu einer niedrigeren Restkeimzahl führt und das Problem der Verstopfung der Membranen löst. Dabei hat es sich als überflüssig erwiesen, Membranen mit Porendurchmessern unterhalb von 0,5 µm zu verwenden. Für die praktisch quantitative Abtrennung der Mikroorganismen, die sich in der thermischen Behandlung als resistent erwiesen haben, reicht eine Porengröße von 1,3 bis 1,5 µm vollständig aus, insbesondere wenn als Membranmaterial Keramik verwendet wird. Auf diese Weise wird zugleich das Problem der Verstopfung gelöst und ein kontinuierlicher Arbeitsbetrieb sichergestellt.

Mit dem erfindungsgemäßen Verfahren ist zudem der Vorteil verbunden, dass man die Erhitzung der Rohmilch nur einmal direkt vor der Einleitung der Käsereimilch in den Käsefertiger durchführt und auf diese Weise die gesetzlich vorgeschriebene Pasteurisierung bewirkt. Für die so erhaltene standardisierte Milch erübrigt sich die Behandlung in einer Bacterofuge.

### Thermische Behandlung

Die Wärmebehandlung der Rohmilch ("Entkeimung") erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Die Abtrennung von Feststoffen ("Käsestaub") sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### Mikrofiltration

Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. In der Milchtechnik hat bislang das Vorurteil geherrscht, zur Abtrennung von Mikroorganismen in der Rohmilch dürfe der Porendurchmesser einen Wert von 0,5 µm nicht unterschreiten. Die Erfindung schließt jedoch die Erkenntnis ein, dass ein Durchmesser im Bereich von 1,3 bis 1,5 µm völlig ausreichend ist, wenn zuvor die Mehrzahl der thermolabilen Keime durch eine entsprechende thermische Behandlung abgetrennt und mit dem Separatorschlamm ausgeschleust worden ist. In Kombination dieses im Vergleich größeren Porendurchmessers mit einer Mikrofiltrationseinrichtung, die im Wesentlichen aus einer Keramikmembran besteht, wird gleichzeitig das Problem der häufigen Verstopfung gelöst.

### Standardisierung

Der für die Standardisierung der aus der Rohmilch separierten Magermilch zuzugebende Rahm kann aus dem aus ihr abgetrennten Rahm entnommen werden. Zusätzlich oder alternativ kann der zuzugebende Rahm aber auch aus anderen Prozessen, insbesondere aus einem Molkeverarbeitungsprozess, in dem Molkenrahm anfällt, entnommen werden. Weiterhin kann bei der Standardisierung durch eine dosierte Zugabe von Eiweiß, das beispielsweise einem anderen Milchverarbeitungsprozess entnommen wird, auch der Eiweißgehalt standardisiert werden.

Eine wichtige Weiterbildung des erfindungsgemäßen Verfahrens besteht darin, dass aus der standardisierten Milch ein Keimkonzentrat abgetrennt wird. Hierdurch wird der Anteil qualitätsgefährdender Keime in der Käsereimilch weiterhin reduziert. Diese Abtrennung kann durch eine bekannte Entkeimungszentrifugation, die entweder 1-stufig oder 2-stufig ausgeführt werden kann, erfolgen. Wegen der bei dem erfindungsgemäßen Verfahren durchgeführten Separation der Rohmilch im kalten Zustand in Verbindung mit moderner Entkeimungstechnologie ist die Menge des anfallenden Keimkonzentrats jedoch so klein, dass es keiner weiteren Bearbeitung bedarf, sondern ohne Einbußen an Wirtschaftlichkeit und ohne weitere Bearbeitung aus dem Prozess ausgeschleust und entsorgt werden kann.

Im Rahmen der Erfindung ist ferner vorgesehen, dass die standardisierte Milch vor ihrer Pasteurisierung vorgestapelt wird. Durch die Vorstapelung in einem Vorstapeltank kann, sofern es erforderlich ist, eine Verweilzeit generiert werden, falls der zu produzierende Käse dieses erforderlich macht. Die eigentliche Pasteurisierung kann unter den gleichen Bedingungen wie bei der eingangs geschilderten ersten Kurzzeiterhitzung durchgeführt werden. Der besondere Vorteil des Verfahrens liegt wie beschrieben darin, dass eine weitere thermische Behandlung und Keimabtrennung in einer Bakterofuge nicht mehr erforderlich ist. Da die Mikrofiltration energetisch wesentlich günstiger durchgeführt werden kann als eine Abtrennung in einer Bacterofuge, liegt der ökonomische Vorteil des erfindungsgemäßen Verfahrens auf der Hand.

### Ablauf des Verfahrens

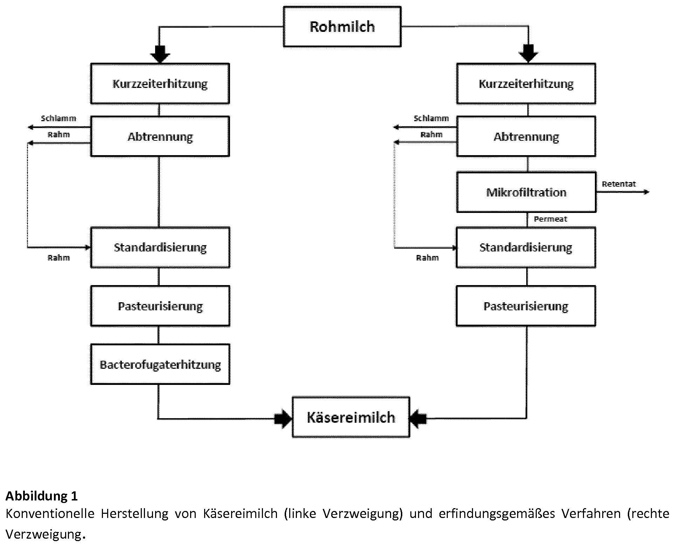

Die Erfindung wird im Folgenden durch die Abbildung 1 weiter erläutert, in dem der Verfahrensablauf als Fließschema wiedergegeben ist.

Im linken Ast des Schemas ist die konventionelle Herstellung von Käsereimilch dargestellt. Dabei wird die Rohmilch zunächst einer Kurzzeiterhitzung unterworfen und dann im erwärmten Zustand in einem Separator vom Schlamm befreit. Gleichzeitig findet eine Entrahmung statt. Die resultierende Magermilch wird nun mit einer Menge Rahm auf einen definierten Fettgehalt eingestellt ("standardisiert") und anschließend pasteurisiert, d.h. für etwa 30 Sekunden auf 72 bis 74 °C erhitzt. Um die während den beiden Erhitzungsschritten gebildeten Sporen abzutrennen, folgt schließlich eine weitere mechanische Abtrennung in einer Bactofuge. Das Keimkonzentrat wird abgetrennt und die pasteurisierte Milch zur weiteren Verarbeitung beispielsweise in einen Käsefertiger gegeben.

Im rechten Ast der Abbildung ist das erfindungsgemäße Verfahren wiedergegeben. Die Rohmilch wird wie oben zunächst einer Kurzzeiterhitzung unterworfen und dann im erwärmten Zustand in einem Separator vom Schlamm befreit. Gleichzeitig findet eine Entrahmung statt. An die Separation schließt sich die Mikrofiltration an, bei nicht nur vegetative Keime, sondern auch Sporen im Retentat zurückgehalten werden, während das Permeat weiterverarbeitet wird. Ein Teil des Rahms wird anschließend wieder zur Einstellung eines definierten Fettgehaltes dem Permeat zurückgegeben. Es schließt sich die Pasteurisierung an, eine Weiterbehandlung in einer Bacterofuge ist indes nicht mehr erforderlich, d.h. die standardisierte Käsereimilch kann direkt in den Käsefertiger geleitet werden.

## Patentansprüche

1. Verfahren zur Herstellung von Käsereimilch, bei dem man
(a) Rohmilch einer Wärmebehandlung bei Temperaturen im Bereich von 70 bis 80°C und über eine Dauer von 20 bis 60 Sekunden unterwirft,
(b) das wärmebehandelte Produkt von festen Bestandteilen befreit,
(c) das resultierende Zwischenprodukt entfettet,
(d) die so erhaltene Magermilch einer Mikrofiltration mittels einer Membran mit einem Porendurchmesser von 1,3 bis 1,5 µm unterwirft,
(e) das resultierende Permeat durch Zugabe einer Menge des im Schritt (c) abgetrennten Rahms auf den gewünschten Fettgehalt einstellt, und die so erhaltene standardisierte Milch
(f) abschließend pasteurisiert.

2. Verfahren nach Anspruch 1, **dadurch gekennzeichnet, dass** die so erhaltene standardisierte Milch keiner Behandlung in einer Bacterofuge entzogen wird.

3. Verfahren nach den Ansprüchen 1 und/oder 2, **dadurch gekennzeichnet, dass** man die Wärmebehandlung in einem Wärmeaustauscher durchführt.

4. Verfahren nach mindestens einem der Ansprüche 1 bis 3, **dadurch gekennzeichnet, dass** man die festen Bestandteile in einem Separator abtrennt.

5. Verfahren nach mindestens einem der Ansprüche 1 bis 4, **dadurch gekennzeichnet, dass** es sich bei der Membran um eine Keramikmembran handelt.

6. Verfahren nach einem der Ansprüche 1 bis 5, **dadurch gekennzeichnet, dass** man bei der Standardisierung den zugegebenen Rahm aus dem separierten Rahm entnimmt.

7. Verfahren nach einem der Ansprüche 1 bis 5, **dadurch gekennzeichnet, dass** man bei der Standardisierung den zugegebenen Rahm aus in einem Molkenverarbeitungsprozess anfallenden Molkenrahm entnimmt.

8. Verfahren nach einem der Ansprüche 1 bis 7, **dadurch gekennzeichnet, dass** man bei der Standardisierung eine dosierte Zugabe von in einem Milchverarbeitungsprozess anfallenden Eiweiß vornimmt.

9. Verfahren nach einem der Ansprüche 1 bis 8, **dadurch gekennzeichnet, dass** man aus der pasteurisierten standardisierten Milch ein Keimkonzentrat abtrennt.

10. Verfahren nach Anspruch 9, **dadurch gekennzeichnet, dass** man die Abtrennung durch Zentrifugieren vornimmt.

11. Verfahren nach einem der Ansprüche 1 bis 10, **dadurch gekennzeichnet, dass** man die standardisierte Milch vor ihrer Pasteurisierung stapelt.

12. Verfahren nach einem der Ansprüche 1 bis 11, **dadurch gekennzeichnet, dass** man die standardisierte Milch bei Temperaturen im Bereich von 70 bis 80°C und über eine Dauer von 20 bis 60 Sekunden pasteurisiert.

## Claims

1. A process for the production of cheese milk, comprising the steps of
(a) subjecting raw milk to heat treatment at a temperature in the range of from 70 °C to 80 °C. and over a time period range of from 20 seconds to 60 seconds,
(b) removing solids from the thermally treated product,
(c) skimming the resulting intermediate,
(d) subjecting the thus-obtained skimmed milk to microfiltration using a membrane with an average pore size of 1.3 to 1.5 µm,
(e) adjusting the resulting permeate to the desired fat content by adding an amount of the cream separated in step (c), and
(f) pasteurizing the thus-obtained standardized milk in a final step.

2. The process according to claim 1, **characterized in that** the thus-obtained standardized milk is not subjected to treatment in a bactofuge.

3. The process according to claims 1 and/or 2, **characterized in that** the heat treatment is carried out in a heat exchanger.

4. The process according to at least one of claims 1 to 3, **characterized in that** the solids are separated in a separator.

5. The process according to at least one of claims 1 to 4, **characterized in that** the membrane is a ceramic membrane.

6. The process according to anyone of claims 1 to 5, **characterized in that** during the standardization the added cream is taken from the separated cream.

7. The process according to anyone of claims 1 to 5, **characterized in that** during the standardization the added cream is taken from a whey cream received in a whey process.

8. The process according to anyone of claims 1 to 7, **characterized in that** during the standardization a metered quantity of a protein obtained in a dairy process is added.

9. The process according to anyone of claims 1 to 8, **characterized in that** a bacteria concentrate is separated from the pasteurized standardized milk.

10. The process according to claim 9, **characterized in that** separation is performed by centrifugation.

11. The process according to anyone of claims 1 to 10, **characterized in that** the standardized milk is stored before it is pasteurized.

12. The process according to anyone of claims 1 to 11, **characterized in that** the standardized milk is pasteurized at temperatures within the range of from 70 to 80 °C and for a period of from 20 to 60 seconds.

## Revendications

1. Procédé pour la production de lait de fromagerie, dans lequel
(a) on soumet du lait cru un traitement thermique à des températures dans la plage de 70 à 80°C et sur une durée de 20 à 60 secondes,
(b) on libère le produit traité thermiquement des constituants solides,
(c) on écrème le produit intermédiaire résultant,
(d) on soumet le lait écrémé ainsi obtenu à une microfiltration au moyen d'une membrane présentant un diamètre de pore de 1,3 à 1,5 µm,
(e) on règle le perméat résultant à la teneur en matières grasses souhaitée par addition d'une quantité de la crème séparée dans l'étape (c) et le lait standardisé ainsi obtenu
(f) est ensuite pasteurisé.

2. Procédé selon la revendication 1, **caractérisé en ce que** le lait standardisé ainsi obtenu n'est soumis à aucun traitement dans un dispositif bactofuge.

3. Procédé selon les revendications 1 et/ou 2, **caractérisé en ce qu'**on réalise le traitement thermique dans un échangeur thermique.

4. Procédé selon au moins l'une quelconque des revendications 1 à 3, **caractérisé en ce qu'**on sépare les constituants solides dans un séparateur.

5. Procédé selon au moins l'une quelconque des revendications 1 à 4, **caractérisé en ce qu'**il s'agit, pour la membrane, d'une membrane céramique.

6. Procédé selon l'une quelconque des revendications 1 à 5, **caractérisé en ce que**, lors de la standardisation, on prélève la crème ajoutée de la crème séparée.

7. Procédé selon l'une quelconque des revendications 1 à 5, **caractérisé en ce que**, lors de la standardisation, on prélève la crème ajoutée de la crème de lactosérum produite dans un procédé de transformation de lactosérum.

8. Procédé selon l'une quelconque des revendications 1 à 7, **caractérisé en ce qu'**on réalise, lors de la standardisation, une addition dosée de protéine produite dans un procédé de transformation du lait.

9. Procédé selon l'une quelconque des revendications 1 à 8, **caractérisé en ce qu'**on sépare un concentrat de germes du lait standardisé pasteurisé.

10. Procédé selon la revendication 9, **caractérisé en ce qu'**on réalise la séparation par centrifugation.

11. Procédé selon l'une quelconque des revendications 1 à 10, **caractérisé en ce qu'**on accumule le lait standardisé avant sa pasteurisation.

12. Procédé selon l'une quelconque des revendications 1 à 11, **caractérisé en ce qu'**on pasteurise le lait standardisé à des températures dans la plage de 70 à 80°C et sur une durée de 20 à 60 secondes.
